# EUROPEAN PATENT SPECIFICATION

(11) **EP 2 750 457 B1**
(45) Date of publication and mention of the grant of the patent: **06.05.2020**
(21) Application number: 12827746.4
(22) Date of filing: 21.05.2012
(51) Int. Cl.: H04W 52/14, H04W 52/28, H04W 52/22, H04W 64/00, H04B 17/27

(54) **METHOD AND DEVICE FOR ADJUSTING TRANSMISSION POWER OF MOBILE TERMINAL**
VERFAHREN UND VORRICHTUNG ZUR REGELUNG DER SENDELEISTUNG EINES MOBILEN ENDGERÄTS
PROCÉDÉ ET DISPOSITIF DE RÉGLAGE DE LA PUISSANCE D'ÉMISSION D'UN TERMINAL MOBILE

(30) Priority: 26.08.2011 CN 201110249234
(43) Date of publication of application: 02.07.2014
(73) Proprietor: ZTE Corporation, Shenzhen, Guangdong 518057 (CN)
(72) Inventor: CHE, Zhonghui, Shenzhen Guangdong 518057 (CN); SONG, Xin, Shenzhen Guangdong 518057 (CN); LI, Hongjuan, Shenzhen Guangdong 518057 (CN); HU,Leshen, Shenzhen Guangdong 518057 (CN)
(74) Representative: Mozzi, Matteo
(86) International application number: PCT/CN2012/075806
(87) International publication number: WO 2013/029396

(56) References cited:
- WO-A1-00/33478
- CN-A- 101 340 216
- CN-A- 102 307 378
- CN-A- 102 325 365
- GB-A- 2 426 665
- US-A1- 2009 131 095
- US-B1- 6 845 246
- US-B1- 7 260 415

## Description

### Technical Field

The present invention relates to the field of communications, and particularly, to a method and device for adjusting transmission power of a mobile terminal.

### Background

With the development of global communication technologies, data services have become an important driving force of the future development of communication technologies, and it can be foreseen that there will be more and more Internet-based data services widely applied in various terminals such as mobile, fixed terminals, etc. Also, the development of the technologies also proposes new demands on the mutual convergence of mobile networks and fixed networks. It is a basic concept for the future networking of mobile operators that the mobile terminal can not only access a mobile network smoothly but also can enjoy bandwidth services provided by the fixed network. For terminals, the UMA (Unlicensed Mobile Access) technology which can access various networks becomes an important function that various mobile terminals have to support in the future. With this technology, the mobile terminal can enable a mobile user to not only enjoy the services of the mobile network but also enjoy the data access services provided by the fixed network. The user uses the convenient network access function provided by the UMA technology to acquire network information, which becomes a preferential function of the user.

According to the conventional implementation, for a mobile terminal having a UMA function, usually, for the sake of the mobility of the user and the long-time use by the user, a battery with a related capacity will be provided so that the radio frequency module always keeps a certain transmission power to meet the electricity consumption requirements of such a terminal. However, how to both realize the maximum electricity saving requirements of the terminal and maximize the user experience of the terminal is an important factor to be taken into account when designing such a terminal, the conventional implementation is to meet the electricity consumption requirements thereof by means of an external power supply, but for users who move frequently, this implementation will affect the user experience, and the other implementations are to reduce radio frequency indexes of related terminals manually, but these products with low indexes result in the problem that the signals are poor in use by the user.

Document US 6,845,246 B1 describes a method for location based power control for mobile communications systems.

### Summary

In view of the above, the present invention proposes a method and device, according to the appended claims, for adjusting transmission power of a mobile terminal without any additional protocol development to be performed on a mobile device, which saves the development time, and has better universality and standardization.

In summary, the application of the above solution has the following beneficial effects:
compared with the prior art, in the technical solution of the present invention, not only the deficiencies of the conventional implementation are avoided but also no additional protocol development needs to be performed on a mobile device, which saves development time, has better universality and standardization, and can be widely applied to mobile devices which have a universal access function, such as products like mobile phones, UFI type data cards, ROUTERS, etc.

### Brief Description of the Drawings

Fig. 1 is a schematic diagram of a device for adjusting transmission power of a mobile terminal in an embodiment of the present invention; and
Fig. 2 is a schematic flowchart of a method for adjusting transmission power of a mobile terminal in an embodiment of the present invention.

### Detailed Description of the Embodiments

The present invention proposes a method and device for adjusting transmission power of a mobile terminal.

The basic concept of the embodiments of the present invention includes: a mobile terminal actively detects information about a current terminal location according to an operating environment where a user is currently located, obtains pre-configured power parameter information corresponding to the current terminal location according to the properties of the information about the current terminal location and one or more location information transmission power correlation policy tables internally installed in the mobile terminal, and actively adjusts a transmission power parameter according to the obtained pre-configured power parameter information. As such, the requirements to the mobile terminal that not only proper wireless transmission can be provided but also the standby time of the mobile terminal is prolonged are met.

In the embodiments of the present invention, the device for adjusting transmission power can actively detect the location information where the mobile terminal is located currently, perform matching according to the detected location information and one or more location information transmission power correlation policy tables stored in the terminal, and adjust the wireless coverage distance of a mobile terminal according to the matching relationship, thereby realizing the dynamic adjustment of the transmission power of the mobile terminal, and thus realizing the energy-saving of the mobile terminal.

The mobile terminal stores one or more location information transmission power correlation policy tables in the database thereof. If the user moves to the suburb, when the user performs a telephone or data service, the transmission power can be increased so as to obtain the surrounding network as far as possible, while at a place where the signals are predicted to be good, the transmission power can be reduced. A location information detection and judgment module is a main unit for performing this database operation.

By way of capturing terminal location information and realizing the adjustment of the transmission power of the terminal using the location information and one or more location information transmission power correlation policy tables that are internally installed, the transmission power can be placed in a lower state under the condition that the surrounding carrier of the mobile terminal can bear wireless signals.

A wireless power adjustment and switching module realizes the adjustment and switching of the wireless transmission power of the mobile terminal according to the related detection result of the detection module and user setting detection, thus realizing the function of dynamically adjusting the transmission power of the mobile terminal.

Hereinafter, the preferred embodiments of the present invention will be described in conjunction with the drawings, and it should be understood that the preferred embodiments described here are merely used for describing and explaining the embodiments of the present invention and not used to limit the present invention.

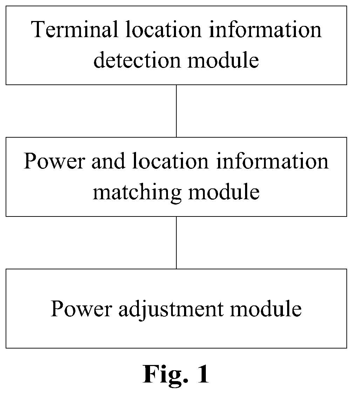

Fig. 1 is a schematic diagram of a device for adjusting transmission power of a mobile terminal in an embodiment of the present invention. As shown in Fig. 1, the device includes a location information detection module, a power and location information matching module and a power adjustment module.

The location information detection module is configured to detect information about a current terminal location according to an operating environment where a user is currently located and report the information about the current terminal location to the power and location information matching module.

The power and location information matching module is configured to obtain pre-configured power parameter information corresponding to the current terminal location according to the information about the current terminal location and one or more location information transmission power correlation policy tables internally installed in the mobile terminal and report the obtained pre-configured power parameter information to the power adjustment module.

The power adjustment module is configured to actively adjust a transmission power parameter according to the pre-configured power parameter information reported by the power and location information matching module. The matching module actively sets application parameter information of the environment where a related terminal is located according to surrounding environment information of the terminal and adjusts the level of the transmission power of the terminal according to related parameter information, thus not only being able to meet the transmission power requirements of the mobile terminal but also being able to improve the use experience of the mobile terminal.

If the mobile terminal is in a remote area and there are fewer base stations in the surrounding, when the user performs a telephone or data service, the transmission power can be allowed to increase to realize maximum coverage; and if the mobile terminal is at a place where the surrounding signals are sufficient, the transmission power needs to be reduced to improve the using duration of the battery of the mobile terminal.

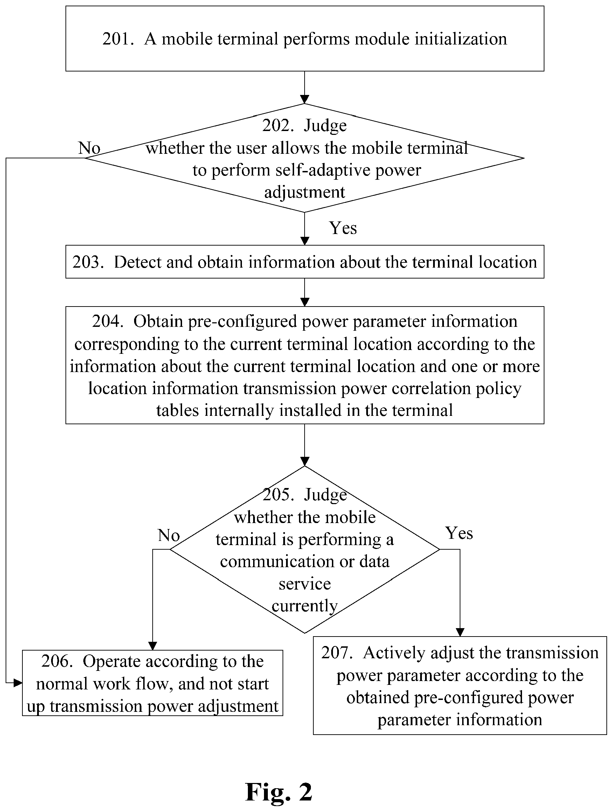

Fig. 2 is a schematic flowchart of a method for adjusting transmission power of a mobile terminal in an embodiment of the present invention. As shown in Fig. 2, the method includes the following steps.

In Step S201, a mobile terminal performs module initialization;
specifically, after the mobile terminal is powered on, the initialization of the mobile terminal is completed, and a location information detection functional module internally installed in the mobile terminal starts to capture and detect information about a terminal location at background.

In Step S202, it is judged whether the user allows the mobile terminal to perform self-adaptive power adjustment; if yes, proceed to Step S203, otherwise, proceed to Step S206.

In Step S203: information about the terminal location is detected and obtained;
specifically, after being powered on and starting running, the mobile terminal actively captures network information. A Google Map API (Application Programming Interface) is internally installed in the mobile terminal, and the physical location where the terminal is located currently can be obtained by detecting the information output by the API. In this way, the capturing of the current terminal location is completed.

For the capturing of the terminal location, except GOOGLE MAP API, for a mobile terminal which has a GPS or a location detection function, the current terminal location can also be obtained using related location detection methods.

In Step S204: pre-configured power parameter information corresponding to the current terminal location is obtained according to the information about the current terminal location and one or more location information transmission power correlation policy tables internally installed in the terminal;
specifically, a mobile terminal database management system configures one or more location information transmission power correlation policy tables, wherein the one or more location information transmission power correlation policy tables are determined according to the number of base stations distributed in the location or network optimization parameter information, i.e., the matching relationship between the location information and pre-configured power parameter information can be determined according to related geographical properties; and
the pre-configured power parameter information corresponding to the current terminal location is obtained according to the information about the current terminal location and the one or more location information transmission power correlation policy tables internally installed in the terminal.

In Step S205, it is judged whether the mobile terminal is performing a communication or data service currently, and if yes, proceed to Step S207, otherwise, proceed to Step S206.

In Step S206: the terminal operates according to the normal work flow, and does not start up transmission power adjustment.

In Step S207: the transmission power parameter is actively adjusted according to the obtained pre-configured power parameter information;
specifically, if power transmission data currently applied by the mobile terminal is higher than a pre-configured value, then a non-loss parameter of the mobile terminal is adjusted so as to reduce the transmission power of the mobile terminal; and if the current power transmission data of the mobile terminal is lower than a pre-configured value, then the non-loss parameter of the mobile terminal keeps unchanged so as to continue to keep the low power transmission of the mobile terminal.

An embodiment of the present invention also provided a mobile terminal for applying the above-mentioned method. In the method and mobile terminal in the embodiments of the present invention, since the transmission power is adjusted dynamically, the matching relationship table is detected only when the mobile terminal is dialing or performing a data service which is set by the user, and therefore the standby current of the mobile terminal will not be increased, which ensures that no additional power consumption is generated for the normal working of the mobile terminal.

Compared to the prior art, in the embodiments of the present invention, not only the deficiencies of the conventional implementation are avoided but also no additional protocol development needs to be performed on a mobile device, which saves development time, has better universality and standardization, and can be widely applied to mobile devices which have a universal access function, such as products like mobile phones, UFI type data cards, ROUTERS, etc.

Of course, the present invention can have may implementations, and without departing from the principle and essence of the present invention, those skilled in the art certainly can make various corresponding changes or alterations according to the present invention, and any modifications, equivalents and improvements made within the principle of the present invention shall be contained in the scope of protection of the present invention.

## Claims

1. A method for adjusting transmission power of a mobile terminal, **characterized in that** the method comprises:
a mobile terminal detecting information about a current terminal location according to an operating environment where a user is currently located; obtaining pre-configured power parameter information corresponding to the current terminal location according to the information about the current terminal location and one or more location information transmission power correlation policy tables internally installed in the mobile terminal; and actively adjusting a transmission power parameter according to the obtained pre-configured power parameter information;
wherein obtaining the pre-configured power parameter information corresponding to the current terminal location according to the information about the current terminal location and the one or more location information transmission power correlation policy tables internally installed in the mobile terminal is:
a mobile terminal database management system configuring one or more location information transmission power correlation policy tables, wherein the one or more location information transmission power correlation policy tables are determined according to the number of base stations distributed in a location or network optimization parameter information, and a matching relationship between location information and the pre-configured power parameter information is determined according to related geographical properties; and
obtaining the pre-configured power parameter information corresponding to the current terminal location according to the information about the current terminal location and the one or more location information transmission power correlation policy tables internally installed in the mobile terminal.

2. The method as claimed in claim 1, **characterized in that** before the mobile terminal detects the information about the current terminal location according to the operating environment where the user is currently located, the method further comprises:
after the mobile terminal is powered on, a location information detection functional module internally installed in the mobile terminal starting to capture and detect information about a terminal location at background.

3. The method as claimed in claim 2, **characterized in that** detecting the information about the current terminal location is: obtaining a physical location where the mobile terminal is located currently by detecting information output by a GOOGLE MAP Application Programming Interface, API, internally installed in the mobile terminal, to complete capturing of the current terminal location.

4. The method as claimed in claim 1, **characterized in that** actively adjusting the transmission power parameter according to the obtained pre-configured power parameter information is: when power transmission data applied by the mobile terminal currently is higher than a pre-configured value, adjusting a non-loss parameter of the mobile terminal to reduce the transmission power of the mobile terminal; and when the current transmission power parameter of the mobile terminal is lower than a pre-configured value, keeping the non-loss parameter of the mobile terminal unchanged to continue to keep low power transmission of the mobile terminal.

5. A device for adjusting transmission power, **characterized in that** the device comprises a location information detection module, a power and location information matching module and a power adjustment module, wherein
the location information detection module is configured to detect information about a current terminal location according to an operating environment where a user is currently located;
the power and location information matching module is configured to obtain pre-configured power parameter information corresponding to the current terminal location according to the information about the current terminal location and one or more location information transmission power correlation policy tables internally installed in the mobile terminal and report the obtained pre-configured power parameter information to the power adjustment module; and
the power adjustment module is configured to actively adjust a transmission power parameter according to the pre-configured power parameter information reported by the power and location information matching module;
wherein the power and location information matching module is configured to obtain the pre-configured power parameter information corresponding to the current terminal location according to the information about the current terminal location and the one or more location information transmission power correlation policy tables internally installed in the mobile terminal in the following manner:
a mobile terminal database management system configuring one or more location information transmission power correlation policy tables, wherein the one or more location information transmission power correlation policy tables are determined according to the number of base stations distributed in a location or network optimization parameter information, and a matching relationship between location information and the pre-configured power parameter information is determined according to related geographical properties; and
obtaining the pre-configured power parameter information corresponding to the current terminal location according to the information about the current terminal location and the one or more location information transmission power correlation policy tables internally installed in the mobile terminal.

6. The device as claimed in claim 5, **characterized in that** the location information detection functional module is further configured to start to capture and detect the information about a terminal location at background after the mobile terminal is powered on.

7. The device as claimed in claim 5, **characterized in that** the location information detection module is configured to detect the information about the current terminal location in the following manner:
obtaining a physical location where the mobile terminal is located currently by detecting information output by a GOOGLE MAP Application Programming Interface, API, internally installed in the mobile terminal, to complete capturing of the current terminal location.

8. The device as claimed in claim 5, **characterized in that** the power adjustment is configured to actively adjust the transmission power parameter according to the obtained pre-configured power parameter information in the following manner: when power transmission data applied by the mobile terminal currently is higher than a pre-configured value, adjusting a non-loss parameter of the mobile terminal to reduce the transmission power of the mobile terminal; and when the current transmission power parameter of the mobile terminal is lower than a pre-configured value, keeping the non-loss parameter of the mobile terminal unchanged to continue to keep low power transmission of the mobile terminal.

## Patentansprüche

1. Verfahren zum Einstellen der Sendeleistung eines mobilen Endgeräts, **dadurch gekennzeichnet, dass** das Verfahren umfasst:
Ermitteln von Informationen über einen aktuellen Endgerätestandort gemäß einer Betriebsumgebung, in der sich ein Benutzer aktuell befindet; Erhalten von vorkonfigurierten Leistungsparameterinformationen, die dem aktuellen Endgerätestandort gemäß den Informationen über den aktuellen Endgerätestandort und einer oder mehreren Richtlinientabellen zur Korrelation von Standortinformationen und Übertragungsleistung entsprechen, die intern im mobilen Endgerät installiert sind; und aktives Einstellen eines Sendeleistungsparameters gemäß den erhaltenen vorkonfigurierten Leistungsparameterinformationen durch ein mobiles Endgerät;
wobei das Erhalten der vorkonfigurierten Leistungsparameterinformationen, die dem aktuellen Endgerätestandort gemäß den Informationen über den aktuellen Endgerätestandort und der einen oder den mehreren Richtlinientabellen zur Korrelation von Standortinformationen und Übertragungsleistung entsprechen, die intern im mobilen Endgerät installiert sind, ist:
Konfigurieren einer oder mehrerer Richtlinientabellen zur Korrelation von Standortinformationen und Übertragungsleistung durch ein Datenbankverwaltungssystem für mobile Endgeräte, wobei die eine oder die mehrere Richtlinientabellen zur Korrelation von Standortinformationen und Übertragungsleistung gemäß der Anzahl von an einem Standort verteilten Basisstationen oder Netzwerkoptimierungsparameterinformationen bestimmt werden und eine passende Beziehung zwischen Standortinformationen und den vorkonfigurierten Leistungsparameterinformationen gemäß verwandten geografischen Eigenschaften bestimmt wird; und
Erhalten der vorkonfigurierten Leistungsparameterinformationen, die dem aktuellen Endgerätestandort gemäß den Informationen über den aktuellen Endgerätestandort und der einen oder den mehreren Richtlinientabellen zur Korrelation von Standortinformationen und Übertragungsleistung, die intern im mobilen Endgerät installiert sind, entsprechen.

2. Verfahren nach Anspruch 1, **dadurch gekennzeichnet, dass** das Verfahren vor dem Ermitteln der Informationen über den aktuellen Endgerätestandort gemäß der Betriebsumgebung, in der sich der Benutzer aktuell befindet, durch das mobile Endgerät ferner umfasst:
Beginnen eines Erfassens und Ermittelns von Informationen über einen Endgerätestandort im Hintergrund durch ein funktionales Modul zur Ermittlung von Standortinformationen, das intern in dem mobilen Endgerät installiert ist, nach dem Einschalten des mobilen Endgeräts.

3. Verfahren nach Anspruch 2, **dadurch gekennzeichnet, dass** das Ermitteln der Informationen über den aktuellen Endgerätestandort ist: Erhalten eines physischen Standorts, an dem sich das mobile Endgerät aktuell befindet, durch Ermitteln von Informationen, die von einer GOOGLE-MAP-Anwendungsprogrammierschnittstelle (API) ausgegeben werden, die intern in dem mobilen Endgerät installiert ist, um das Erfassen des aktuellen Endgerätestandorts abzuschließen.

4. Verfahren nach Anspruch 1, **dadurch gekennzeichnet, dass** das aktive Einstellen des Sendeleistungsparameters gemäß den erhaltenen vorkonfigurierten Leistungsparameterinformationen darin besteht: Wenn die vom mobilen Endgerät angewendeten Leistungsübertragungsdaten aktuell höher als ein vorkonfigurierter Wert sind, wird ein verlustfreier Parameter des mobilen Endgeräts eingestellt, um die Sendeleistung des mobilen Endgeräts zu senken; und wenn der aktuelle Sendeleistungsparameter des mobilen Endgeräts niedriger als ein vorkonfigurierter Wert ist, bleibt der verlustfreie Parameter des mobilen Endgeräts unverändert, um die Übertragung des mobilen Endgeräts mit geringer Leistung fortzusetzen.

5. Vorrichtung zum Einstellen der Sendeleistung, **dadurch gekennzeichnet, dass** die Vorrichtung ein Modul zur Ermittlung von Standortinformationen, ein Modul zum Abgleichen von Leistungs- und Standortinformationen und ein Modul zur Einstellung der Leistung umfasst, wobei
das Modul zur Ermittlung von Standortinformationen konfiguriert ist, um Informationen über einen aktuellen Endgerätestandort gemäß einer Betriebsumgebung zu ermitteln, in der sich ein Benutzer aktuell befindet;
das Modul zum Abgleichen von Leistungs- und Standortinformationen konfiguriert ist, um vorkonfigurierte Leistungsparameterinformationen zu erhalten, die dem aktuellen Endgerätestandort gemäß den Informationen über den aktuellen Endgerätestandort und einer oder mehreren Richtlinientabellen zur Korrelation von Standortinformationen und Übertragungsleistung entsprechen, die intern im mobilen Endgerät installiert sind, und die erhaltenen vorkonfigurierten Leistungsparameterinformationen an das Modul zum Abgleichen von Leistungs- und Standortinformationen zu melden; und
das Modul zur Einstellung der Leistung konfiguriert ist, um einen Sendeleistungsparameter gemäß den vorkonfigurierten Leistungsparameterinformationen, die vom Modul zum Abgleichen von Leistungs- und Standortinformationen gemeldet wurden, aktiv einzustellen.
wobei das Modul zum Abgleichen von Leistungs- und Standortinformationen konfiguriert ist, um die vorkonfigurierten Leistungsparameterinformationen, die dem aktuellen Endgerätestandort gemäß den Informationen über den aktuellen Endgerätestandort und der einen oder den mehreren Richtlinientabellen zur Korrelation von Standortinformationen und Übertragungsleistung entsprechen, die intern im mobilen Endgerät installiert sind, auf folgende Weise zu erhalten:
Konfigurieren einer oder mehrerer Richtlinientabellen zur Korrelation von Standortinformationen und Übertragungsleistung durch ein Datenbankverwaltungssystem für mobile Endgeräte, wobei die eine oder die mehrere Richtlinientabellen zur Korrelation von Standortinformationen und Übertragungsleistung gemäß der Anzahl von an einem Standort verteilten Basisstationen oder Netzwerkoptimierungsparameterinformationen bestimmt werden und eine passende Beziehung zwischen Standortinformationen und den vorkonfigurierten Leistungsparameterinformationen gemäß verwandten geografischen Eigenschaften bestimmt wird; und
Erhalten der vorkonfigurierten Leistungsparameterinformationen, die dem aktuellen Endgerätestandort gemäß den Informationen über den aktuellen Endgerätestandort und der einen oder den mehreren Richtlinientabellen zur Korrelation von Standortinformationen und Übertragungsleistung, die intern im mobilen Endgerät installiert sind, entsprechen.

6. Vorrichtung nach Anspruch 5, **dadurch gekennzeichnet, dass** das funktionale Modul zum Ermitteln von Standortinformationen ferner konfiguriert ist, das Erfassen und Ermitteln der Informationen über einen Endgerätestandort im Hintergrund zu beginnen, nachdem das mobile Endgerät eingeschaltet wurde.

7. Vorrichtung nach Anspruch 5, **dadurch gekennzeichnet, dass** das Modul zur Ermittlung von Standortinformationen konfiguriert ist, um die Informationen über den aktuellen Endgerätestandort auf folgende Weise zu ermitteln:
Erhalten eines physischen Standorts, an dem sich das mobile Endgerät aktuell befindet, durch Ermitteln von Informationen, die von einer GOOGLE-MAP-Anwendungsprogrammierschnittstelle (API) ausgegeben werden, die intern in dem mobilen Endgerät installiert ist, um das Erfassen des aktuellen Endgerätestandorts abzuschließen.

8. Vorrichtung nach Anspruch 5, **dadurch gekennzeichnet, dass** die Leistungseinstellung konfiguriert ist, um den Sendeleistungsparameter gemäß den erhaltenen vorkonfigurierten Leistungsparameterinformationen auf folgende Weise aktiv einzustellen:
wenn die vom mobilen Endgerät angewendeten Leistungsübertragungsdaten aktuell höher als ein vorkonfigurierter Wert sind, wird ein verlustfreier Parameter des mobilen Endgeräts eingestellt, um die Sendeleistung des mobilen Endgeräts zu senken; und wenn der aktuelle Sendeleistungsparameter des mobilen Endgeräts niedriger als ein vorkonfigurierter Wert ist, bleibt der verlustfreie Parameter des mobilen Endgeräts unverändert, um die Übertragung des mobilen Endgeräts mit geringer Leistung fortzusetzen.

## Revendications

1. Procédé pour régler une puissance d'émission d'un terminal mobile, **caractérisé en ce que** le procédé comprend :
un terminal mobile détecte des informations concernant un emplacement de terminal actuel selon un environnement d'exploitation où un utilisateur est actuellement localisé ; obtient des informations de paramètres de puissance préconfigurées correspondant à l'emplacement de terminal actuel en fonction des informations concernant l'emplacement de terminal actuel et d'une ou plusieurs tables de politiques de corrélation de puissance d'émission d'informations d'emplacement installées en interne dans le terminal mobile ; et règle activement un paramètre de puissance d'émission en fonction des informations de paramètres de puissance préconfigurées obtenues ;
dans lequel l'obtention des informations de paramètres de puissance préconfigurées correspondant à l'emplacement de terminal actuel en fonction des informations concernant l'emplacement de terminal actuel et de la ou des tables de politiques de corrélation de puissance d'émission d'informations d'emplacement installées en interne dans le terminal mobile est :
un système de gestion de bases de données de terminal mobile configure une ou plusieurs tables de politiques de corrélation de puissance d'émission d'informations d'emplacement, dans lequel la ou les tables de politiques de corrélation de puissance d'émission d'informations d'emplacement sont déterminées en fonction du nombre de stations de base réparties dans un emplacement ou d'informations de paramètres d'optimisation de réseau et une relation de correspondance entre les informations d'emplacement et les informations de paramètres de puissance préconfigurées est déterminée en fonction de propriétés géographiques associées ; et
obtient des informations de paramètres de puissance préconfigurées correspondant à l'emplacement de terminal actuel en fonction des informations concernant l'emplacement de terminal actuel et de la ou des tables de politique de corrélation de puissance d'émission d'informations d'emplacement installées en interne dans le terminal mobile.

2. Procédé selon la revendication 1, **caractérisé en ce que**, avant que le terminal mobile ne détecte les informations concernant l'emplacement de terminal actuel en fonction de l'environnement d'exploitation où l'utilisateur est actuellement localisé, le procédé comprend en outre :
après la mise sous tension du terminal mobile, un module fonctionnel de détection d'informations d'emplacement, installé en interne dans le terminal mobile, commence à capturer et à détecter des informations sur un emplacement de terminal en arrière-plan.

3. Procédé selon la revendication 2, **caractérisé en ce que** la détection des informations concernant l'emplacement de terminal actuel consiste à : obtenir un emplacement physique où se trouve actuellement le terminal mobile en détectant des informations produites par une interface de programmation d'application, API, GOOGLE MAP, installée en interne dans le terminal mobile, pour terminer la capture de l'emplacement de terminal actuel.

4. Procédé selon la revendication 1, **caractérisé en ce que** le réglage actif du paramètre de puissance d'émission selon les informations de paramètres de puissance préconfigurées obtenues est le suivant : lorsque des données d'émission de puissance appliquées par le terminal mobile sont actuellement supérieures à une valeur préconfigurée, le réglage d'un paramètre de non-perte du terminal mobile pour réduire la puissance d'émission du terminal mobile ; et lorsque le paramètre de puissance d'émission actuel du terminal mobile est inférieur à une valeur préconfigurée, le maintien inchangé du paramètre de non-perte du terminal mobile pour continuer à maintenir une émission de faible puissance du terminal mobile.

5. Dispositif pour régler une puissance d'émission, **caractérisé en ce que** le dispositif comprend un module de détection d'informations d'emplacement, un module de mise en correspondance d'informations de puissance et d'emplacement et un module de réglage de puissance, dans lequel
le module de détection d'informations d'emplacement est configuré pour détecter des informations concernant un emplacement de terminal actuel selon un environnement d'exploitation où un utilisateur est actuellement localisé ;
le module de mise en correspondance d'informations de puissance et d'emplacement est configuré pour obtenir des informations de paramètres de puissance préconfigurées correspondant à l'emplacement de terminal actuel en fonction des informations concernant l'emplacement de terminal actuel et d'une ou plusieurs tables de politiques de corrélation de puissance d'émission d'informations d'emplacement, installées en interne dans le terminal mobile, et rapporter les informations de paramètres de puissance préconfigurées obtenues au module de réglage de puissance ; et
le module de réglage de puissance est configuré pour régler activement un paramètre de puissance d'émission en fonction des informations de paramètre de puissance préconfigurées rapportées par le module de mise en correspondance d'informations de puissance et d'emplacement ;
dans lequel le module de mise en correspondance d'informations de puissance et d'emplacement est configuré pour obtenir les informations de paramètres de puissance préconfigurées correspondant à l'emplacement de terminal actuel en fonction des informations concernant l'emplacement de terminal actuel et de la ou des tables de politiques de corrélation de puissance d'émission d'informations d'emplacement, installées en interne dans le terminal mobile, de la manière suivante :
un système de gestion de bases de données de terminal mobile configure une ou plusieurs tables de politiques de corrélation de puissance d'émission d'informations d'emplacement, dans lequel la ou les tables de politiques de corrélation de puissance d'émission d'informations d'emplacement sont déterminées en fonction du nombre de stations de base réparties dans un emplacement ou d'informations de paramètres d'optimisation de réseau et une relation de correspondance entre les informations d'emplacement et les informations de paramètres de puissance préconfigurées est déterminée en fonction de propriétés géographiques associées ; et
obtient des informations de paramètres de puissance préconfigurées correspondant à l'emplacement de terminal actuel en fonction des informations concernant l'emplacement de terminal actuel et de la ou des tables de politique de corrélation de puissance d'émission d'informations d'emplacement installées en interne dans le terminal mobile.

6. Dispositif selon la revendication 5, **caractérisé en ce que** le module fonctionnel de détection d'informations d'emplacement est en outre configuré pour commencer à capturer et détecter les informations concernant un emplacement de terminal en arrière-plan après la mise sous tension du terminal mobile.

7. Dispositif selon la revendication 5, **caractérisé en ce que** le module de détection d'informations d'emplacement est configuré pour détecter les informations concernant l'emplacement de terminal actuel de la manière suivante :
l'obtention d'un emplacement physique où se trouve actuellement le terminal mobile en détectant des informations produites par une interface de programmation d'application, API, GOOGLE MAP installée en interne dans le terminal mobile, pour terminer la capture de l'emplacement de terminal actuel.

8. Dispositif selon la revendication 5, **caractérisé en ce que** le réglage de puissance est configuré pour régler activement le paramètre de puissance d'émission selon les informations de paramètre de puissance préconfigurées obtenues de la manière suivante :
lorsque des données de transmission de puissance appliquées par le terminal mobile sont actuellement plus élevées qu'une valeur préconfigurée, le réglage d'un paramètre de non-perte du terminal mobile pour réduire la puissance d'émission du terminal mobile ; et lorsque le paramètre de puissance d'émission actuel du terminal mobile est inférieur à une valeur préconfigurée, le maintien inchangé du paramètre de non-perte du terminal mobile pour continuer à maintenir une transmission de faible puissance du terminal mobile.
